# EUROPEAN PATENT SPECIFICATION

(11) **EP 2 969 426 B1**
(45) Date of publication and mention of the grant of the patent: **20.12.2017**
(21) Application number: 13878244.6
(22) Date of filing: 14.03.2013
(51) Int. Cl.: B27B 17/08, F16D 65/10, F16D 65/12

(54) **CHAINSAW WITH COAST BRAKE/CHAINBRAKE MECHANISM**
KETTENSÄGE MIT NACHLAUF- UND KETTENBREMSMECHANISMUS
SCIE À CHAÎNE AVEC UN MÉCANISME DE FREIN D'ENTRAÎNEMENT DÉBRAYÉ/DE FREIN DE CHAÎNE

(43) Date of publication of application: 20.01.2016
(73) Proprietor: Husqvarna AB, 56182 Huskvarna (SE)
(72) Inventor: ARNOLD, Gregory, W., Cornelius, North Carolina 28031 (US); EVANS, Jonathan, Charlotte, North Carolina 28214 (US); SMITH, Stephen, Charlotte, North Carolina 28269 (US)
(86) International application number: PCT/US2013/031245
(87) International publication number: WO 2014/142862

(56) References cited:
- DE-U1- 7 710 560
- GB-B- 2 413 525
- GB-B- 2 413 525
- US-A- 5 915 795
- US-A1- 2011 061 246
- US-A1- 2011 061 246

## Description

### TECHNICAL FIELD

Example embodiments generally relate to hand held power equipment and, more particularly, relate to a coast brake/chainbrake mechanism for a chainsaw. In particular the present invention relates to a chainsaw according to the preamble of claim 1. Such a chainsaw is known from GB 2 413 525 B.

### BACKGROUND

Chainsaws are commonly used in both commercial and private settings to cut timber or perform other rigorous cutting operations. Because chainsaws are typically employed in outdoor environments, and the work they are employed to perform often inherently generates debris, chainsaws are typically relatively robust hand held machines. They can be powered by gasoline engines or electric motors (e.g., via batteries or wired connections) to turn a chain around a bar at relatively high speeds. The chain includes cutting teeth that engage lumber or another medium in order to cut the medium as the teeth are passed over a surface of the medium at high speed.

Given that the chain is expected to turn at relatively high speeds, and that the teeth are designed to cut, it can be appreciated that the chain should not be allowed to come into contact with any material that is not specifically intended for cutting while the chain is rotating around the bar. Certain phenomena such as kickback can create conditions in which the chances of inadvertent contact with a rotating chain could occur. Accordingly, many chainsaws are designed to include a chainbrake activated by a hand guard that is placed proximate to a forward hand of the operator (i.e., the hand closest to the chain during operation) in order to stop operation of the chainsaw if a kickback occurs. In this regard, for example, if the chainbrake is activated when hand guard is actuated responsive to contact with a hand or inertia generated by a kickback, the rotation of the chain may be stopped.

One way to stop chain rotation is to remove the motive force applied to the chain. Thus, a switch may be used to stop a power source from turning the chain. It can be appreciated that it is desirable to stop the chain from rotating relatively quickly, however, simply stopping the application of power to the engine or motor may not be sufficient to achieve a corresponding rapid stopping of chain movement. Inertia of the chain and engine or motor components may cause there to be a delay between the securing of power application and the stopping of chain rotation. Accordingly, a chainbrake may be provided to rapidly stop the chain in addition a switch that removes power to the chain.

In some cases, it may also be desirable to have the chain stop rotating within a reasonable time period after normal release of the trigger that controls operation of the power unit. Thus, some chainsaws may further include a coast brake mechanism to slow the chain when the trigger is released.

### BRIEF SUMMARY OF SOME EXAMPLES

Some example embodiments may provide for a brake assembly that can be used to apply both chainbrake and coast brake functionality. Accordingly, a single switch may be involved in both chainbraking and coast brake functions. However, two different forces may be applied to the friction mechanism that is employed to perform the respective chainbrake and coast brake functions while still operating the friction mechanism in the same direction. The invention provides a chainsaw according to claim 1. The chainsaw includes a power unit configured to operate at least in part in response to actuation of a trigger, a bar, a chain operably coupled to the bar to rotate around the bar responsive to drive power from the power unit when the trigger is actuated, and a hand guard configured to be actuated responsive to contact with a hand of an operator of the chainsaw or inertia to activate a brake assembly to stop rotation of the chain. The brake assembly includes a band arranged to receive, at a first end of the band, at least two different forces to be applied to a friction surface of a drum coupled to the power unit. At least two different forces include a first force applied responsive to actuation of the chain brake, and a second force applied responsive to coast brake actuated by the release of the trigger. The brake assembly further includes a slide and a pivot bracket mounted to the slide.

Some example embodiments may provide a way to provide improved functionality of a chainsaw with relatively fewer individual parts.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a perspective view of a chainsaw according to an example embodiment;
FIG. 2 illustrates a side view of the chainsaw from the opposite side of that which is shown in FIG. 1 according to an example embodiment;
FIG. 3 illustrates a side view of selected components of the chainsaw with the housing of the chainsaw partially cutaway to expose a brake assembly according to an example embodiment;
FIG. 4 illustrates a perspective view of a pinion which includes a drum in accordance with an example embodiment;
FIG. 5A illustrates a side view of components of a brake assembly during normal operation with a trigger actuated according to an example embodiment;
FIG. 5B illustrates a side view of components of the brake assembly during operation of a coast brake function after release of the trigger according to an example embodiment;
FIG. 5C illustrates a side view of components of the brake assembly during operation of a chainbrake function while the trigger remains actuated according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

As indicated above, some example embodiments provide for a brake assembly that can be used to apply both chainbrake and coast brake functionality to reduce chainsaw part count, while maintaining robust capability. In this regard, some embodiments enable two different forces to be applied to a friction mechanism that forms a portion of the brake assembly. The two forces are employed to perform the respective chainbrake and coast brake functions while still operating the friction mechanism in the same direction or manner (albeit with different forces applied). In an example embodiment, a slide mechanism is provided with a pivot bracket mounted thereon. The pivot bracket and slide mechanism may each have separate biasing elements (e.g., springs), and each respective biasing element may be employed to allow operation of the brake assembly to stop rotation of the chain when either the coast brake functionality or the chainbrake functionality is activated. In some cases, one biasing element may be employed to rotate the pivot bracket to implement coast brake functionality when a switch securing power to the power unit is deactivated after the trigger is released and the other biasing element may be employed to cause slide mechanism to move to implement chainbrake functionality while the same switch is deactivated when the hand guard is tripped.

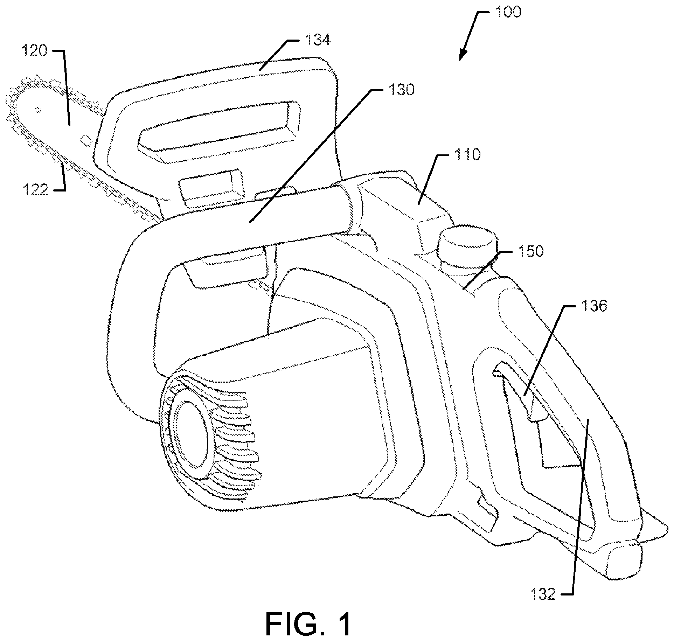

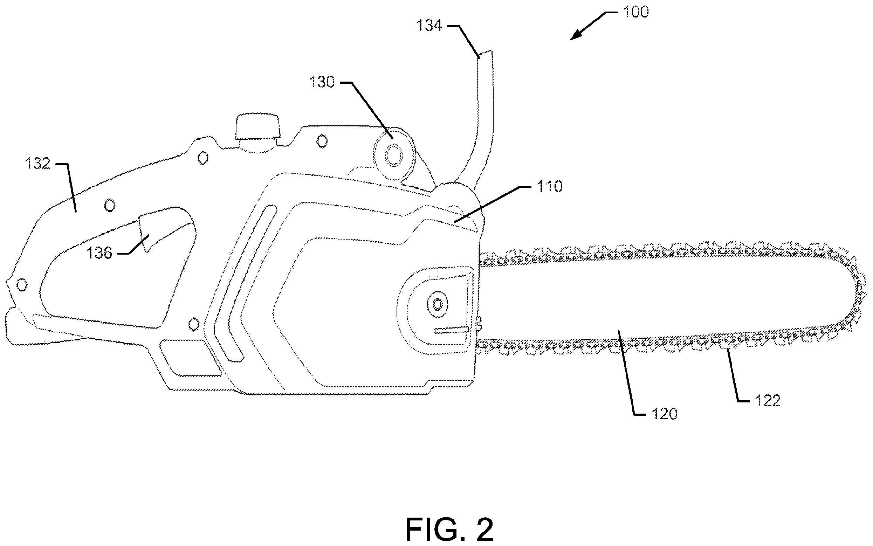

FIG. 1 illustrates a perspective view of a chainsaw 100 according to an example embodiment. FIG. 2 illustrates a side view of the chainsaw 100 from the opposite side of that which is shown in FIG. 1 according to an example embodiment. It should be appreciated that although an example embodiment is shown and described illustrating a hand held chainsaw, example embodiments could be practiced in connection with other similar devices such as pole saws or other cutting devices that employ a chain that rotates to affect cutting, where it is advantageous to slow the chain responsively for better performance or safety. It should also be appreciated that the chainsaw 100 is merely one example of power equipment that includes a working assembly (i.e., the cutting components of the chainsaw 100) that may require or otherwise benefit from rapid slowing of the components thereof.

As shown in FIGS. 1 and 2, the chainsaw 100 includes a housing 110 inside which a power unit or motor (not shown) is housed. In some embodiments, the power unit may be either an electric motor or an internal combustion engine. Furthermore, in some embodiments, the power unit may include more than one electric motor where one such electric motor powers the working assembly of the chainsaw 100 and the other electric motor of the power unit powers a pump that lubricates the working assembly. The chainsaw 100 further includes a guide bar 120 that is attached to housing 110 along one side thereof. A chain 122 is driven around the guide bar 120 responsive to operation of the power unit in order to enable the chainsaw 100 to cut lumber or other materials. The guide bar 120 and the chain 122 form the working assembly of the chainsaw 100.

The chainsaw 100 may include a front handle 130 and a rear handle 132. A chain brake and front hand guard 134 may be positioned forward of the front handle 130 to stop the movement of the chain 122 in the event of a kickback. In an example embodiment, the hand guard 134 is tripped by rotating forward in response to contact with a portion of the arm (e.g., the hand/wrist) of the operator of the chainsaw 100. In some cases, the hand guard 134 may also be tripped in response to detection of inertial measurements indicative of a kickback.

The rear handle 132 includes a trigger 136 to facilitate operation of the power unit when the trigger 136 is actuated. In this regard, for example, when the trigger 136 is actuated (e.g., depressed), the rotating forces generated by the power unit may be coupled to the chain 122 either directly (e.g., for electric motors) or indirectly (e.g., for gasoline engines). Some power units may employ a clutch to provide operable coupling of the power unit to a sprocket that turns the chain 122. In some cases (e.g., for a gasoline engine), if the trigger 136 is released, the engine may idle and application of power from the power unit to turn the chain 122 may be stopped. In other cases (e.g., for electric motors), releasing the trigger 136 may secure operation of the power unit. The housing 110 may include a fuel tank for providing fuel to the power unit. The housing 110 may also include or at least partially define an oil reservoir 150, access to which may be provided to allow the operator to pour oil into the oil reservoir 150. The oil in the oil reservoir 150 may be used to lubricate the chain 122 as the chain 122 is turned. It should be appreciated that although the chainsaw 100 of FIGS. 1 and 2 includes a power unit that is an electric motor, the power unit could be a petrol powered engine in alternative embodiments.

As can be appreciated from the description above, actuation of the trigger 136 initiates movement of the chain 122 around the guide bar 120. Meanwhile, at least two different events may cause the movement of the chain 122 around the guide bar 120 to be interrupted or stopped. In this regard, for example, release of the trigger 136 and tripping of the hand guard 134 cause movement of the chain 122 around the guide bar 120 to be stopped.

Tripping of the hand guard 134 occurs in response to detection of conditions indicative of a kickback. Since a kickback is an undesirable and potentially dangerous condition, movement of the chain 122 is stopped quickly in response to actuating the chainbrake. The chainsaw 100 is therefore provided with a chainbrake mechanism that is configured to stop movement of the chain 122 within a first predetermined period of time after the hand guard 134 is tripped. In some cases, operation of the chainbrake mechanism also deactivates a switch that turns off the power unit.

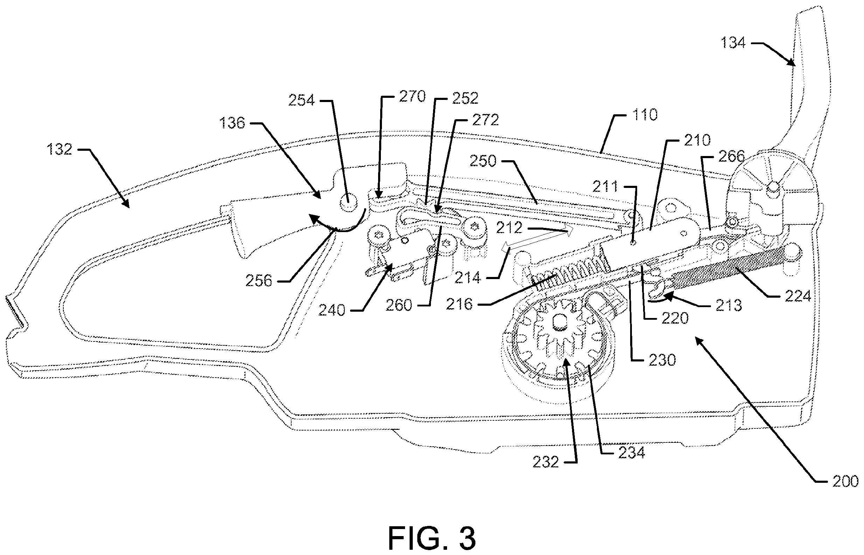

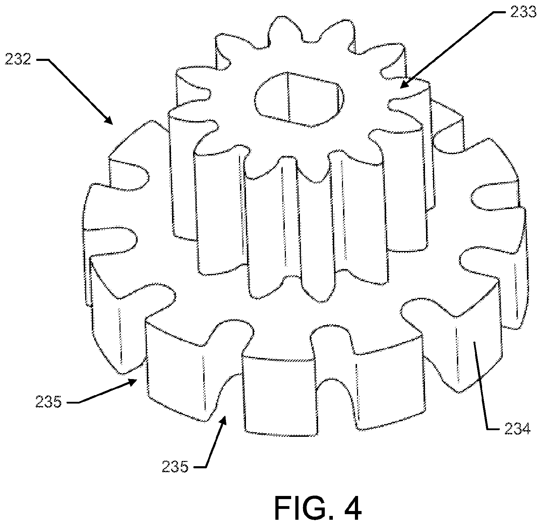

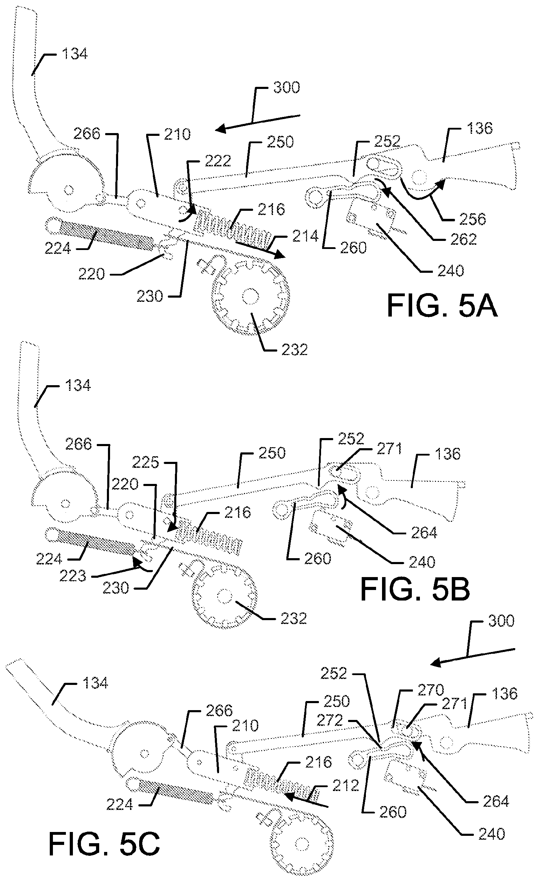

Meanwhile, releasing of the trigger 136 is a routine event that does not necessarily present the same urgency for stopping movement of the chain 122. Thus, it may not be necessary to stop movement of the chain 122 as quickly after release of the trigger 136 as would otherwise be accomplished in response to activating chainbrake. However, it may also be undesirable to simply allow the chain 122 to rotate responsive to inertial forces after the trigger 136 is released until the inertial forces decay away naturally. Moreover, some chainsaws may see the time it takes for the chain 122 to stop rotating after release of the trigger 136 change over time as components age. Thus, it is desirable to facilitate coast brake of the chain 122 so that the chain 122 stops moving within a second predetermined period of time that may be different than the first predetermined period of time. A coast brake function is therefore provided by the application of friction to the rotation of a drum that is operably coupled to the chain 122. Operation of the coast brake function responsive to release of the trigger 136 also deactivates a switch that turns off the power unit. The embodiments provide a brake assembly 200 that incorporates both chainbrake and coast brake functions within a single assembly. Moreover, the example embodiments employ a single switch (a switch for turning off the power unit when deactivated) in connection with operation of both the chainbrake and coast brake functions. FIG. 3 illustrates a side view of selected components of the chainsaw 100 with the housing 110 partially cutaway to expose the brake assembly 200. FIG. 4 illustrates a perspective view of a pinion with drum in accordance with an example embodiment. FIG. 5, which includes FIGS. 5A, 5B and 5C, illustrates components of the brake assembly 200 in various different operational situations.

Referring now to FIGS. 3 to 5, the brake assembly 200 includes a slide 210 and a pivot bracket 220 (or coast bracket). In an example embodiment, the slide 210 is mounted in such a way as to allow the slide 210 to move linearly in a first direction 212 or a second direction 214. In some cases, the slide 210 may be movably mounted within a channel. However, other mounting arrangements could alternatively be employed. The slide 210 may be biased toward movement in the first direction 212 by a first biasing element (e.g., spring 216).

The pivot bracket 220 is rotatably mounted to the slide 210 and is enabled to rotate or pivot about an axis defined at a portion of the slide 210 as indicated by arrow 213. In the example of FIG. 3, the axis of rotation 211 of the pivot bracket 220 is defined at a point on the slide 210 that is spaced apart from either end of the slide 210, and the pivot bracket 220 affixed to the slide 210. In an example embodiment, the pivot bracket 220 may be biased to be pivoted generally in the first direction 213 by a second biasing element (e.g., spring 224). The second biasing element may be anchored at a first end thereof to a portion of the housing 110 or other fixed internal component of the chainsaw 100. Meanwhile, a second end of the second biasing element may engage a portion of the pivot bracket 220.

In an example embodiment, the brake assembly 200 further includes a band 230 (e.g., a brake band) that is configured to selectively engage a drum, which may be provided to be coupled to a gear, pinion or sprocket, or may be manufactured as a single unitary pinion with drum 232 (e.g., as shown in FIG. 4). Thus, it should be appreciated that the pinion with drum 232 of FIG. 4 merely represents one example of a drum for which example embodiments may be applicable. Moreover, it should be appreciated that the coupling between the pinion, gear or sprocket and the drum may be rigid, indirect, or provided with axial play therebetween. Furthermore, it should be appreciated that some examples may employ a slip clutch or other clutching mechanism between the drive shaft of the motor and the drum. The drum could also be an example of a clutch drum of a centrifugal clutch. In some embodiments, band 230 may extend substantially 360 degrees around the periphery of the pinion with drum 232. However, in other embodiments, the band 230 may extend less than 360 degrees. In an example embodiment, the pinion with drum 232 is operably coupled to the chain 122 (e.g., via connection to a sprocket that turns responsive to application of power from the power unit). In an example embodiment, the operable coupling between the pinion with drum 232 and the chain 122 may be provided via gear 233. Accordingly, by stopping or slowing rotation of the pinion 232, corresponding movement of the chain 122 is also stopped or slowed via corresponding slowing of the rotation of the gear 233. The pinion 232 includes a friction surface 234 disposed around a periphery thereof. The friction surface 234 engages the band 230 responsive to tightening of the band 230 in order to apply friction to the pinion 232 and slow or stop rotation of the pinion 232 after power is no longer being coupled to the pinion 232 from the power unit.

In the example embodiment, the band 230 is an elongate and flexible member that is operably coupled to the slide 210 and the pivot bracket 220. A first end of the band 230 is connected to the pivot bracket 220, and thereby also to the slide 210. Meanwhile, the band 230 may wrap around the pinion 232 and a second end of the band 230 may be anchored to a portion of the housing 110 or another fixed internal component of the chainsaw 100. Thus, when the slide 210 is moved in the first direction 212 or when the pivot bracket 220 rotates toward the direction shown by arrow 213, the band 230 will be tightened around the pinion 232 and frictional contact between the band 230 and the friction surface 234 may tend to slow or stop the rotation of the pinion 232 and therefore also slow or stop movement of the chain 122.

In some cases, the friction surface 234 may be provided as a relatively smooth and continuous surface extending around a periphery of the pinion 232. However, in other embodiments, the friction surface 234 may be provided as a discontinuous surface. FIG. 4 illustrates an example of the pinion 232 being provided with the friction surface 234 configured as a discontinuous surface. By providing the friction surface 234 in the form of a discontinuous surface, the heat generated by the friction may be more easily removed from spaces between portions of the friction surface that contact the band 230. Moreover, there may also be a relatively lower amount of wear on the band 230 since the heat generated by friction may be reduced. Thus, the life of the band 230 may be extended. As shown in FIG. 4, the discontinuities in the friction surface 234 may be formed by channels 235 that may be spaced apart from each other at regular intervals over the friction surface 234.

Given that the first biasing element tends to push the slide 210 in the first direction 212, it should be appreciated that an amount of force with which the first biasing element acts will determine the relative tightness of the frictional contact between the band 230 and the friction surface 234 when the first biasing element is enabled to act upon the slide 210. Similarly, given that the second biasing element tends to rotate the pivot bracket 220 toward the direction shown by arrow 213, it should be appreciated that an amount of force with which the second biasing element acts will determine the relative tightness of the frictional contact between the band 230 and the friction surface 234 when the second biasing element is enabled to act upon the pivot bracket 220. Accordingly, the amount of pressure or force of the springs, elastic bands or other such members that form the first and second biasing elements, respectively, may determine the corresponding amount of friction created and therefore the stopping speed of the chain 122 responsive to the application of such friction.

Example embodiments may be designed to apply desirable amounts of force via the respective first and second biasing elements in response to corresponding desirable stimuli in order to perform coast brake and chainbrake functionalities via the brake assembly 200. Moreover, both coast brake and chainbrake functionalities are implemented responsive to deactivation of the same switch (switch 240) that is deactivated to stop the transfer of power from the power unit to the pinion with drum 232 (and the chain 122). The switch 240 is generally activated in response to actuation of the trigger 136. However, as will be discussed in greater detail below, hand guard 134 trip or trigger 136 release allows the switch 240 to be deactivated while both coast brake and chainbrake functionalities are implemented.

In an example embodiment, both the first and second biasing elements may be overcome during normal operation of the chainsaw 100. As such, for example, when the hand guard 134 is in its normal operating (i.e., not tripped) position and the trigger 136 is actuated, the first and second biasing elements may not be enabled to move the slide 210 and/or pivot bracket 220 in the first direction 212 and/or direction shown by arrow 213. Thus, while the slide 210 and/or pivot bracket 220 remain positioned farther in the second direction 214, the switch 240 may be activated and the power unit may turn the pinion with drum 232 and move the chain 122. The trigger 136 is operably coupled to the slide 210 and the pivot bracket 220 mounted thereon via a trigger linkage 250. The trigger linkage 250 is an elongate member extending from a forward portion of the trigger 136 to engage a portion of the pivot bracket 220. The trigger linkage 250 includes a detent 252 disposed proximate to an end of the trigger linkage 250 that is proximate to the trigger 136. Meanwhile, the trigger 136 is rotatably mounted about a pivot point 254 so that the trigger 136 rotates in the direction shown by arrow 256 when actuated (e.g., by the rear hand of the operator). When actuated, the trigger 136 rotates at least partially within the rear handle 134 portion of the housing 110 and the detent 252 is directed to contact a portion of a switch lever 260 that rotates in a first direction 262 (see FIG. 5) to activate the switch 240. When the trigger 136 is released, the detent 252 is moved away from the switch lever 260 to allow the switch lever 260 to rotate in a second direction 264 (see FIG. 5) to deactivate the switch 240.

While the trigger 136 is actuated (and the hand guard 134 is not tripped), the trigger linkage 250 applies a force to the pivot bracket 220 to overcome the pressure applied by the second biasing element and thereby maintain the band 230 in an expanded state (e.g., such that the first end of the band 230 is maintained further in the second direction 214) so that the band 230 does not contact the pinion with drum 232, or at least has minimal contact therewith. However, when the trigger 136 is released, the trigger linkage 250 allows the pivot bracket 220 to rotate in response to the pressure applied by the second biasing element 224, which causes the band 230 to collapse onto or otherwise contact the pinion with drum 232 to slow or stop the pinion with drum by providing a friction brake. The amount of friction is proportional to the tension of the second biasing element 224.

When the power unit is running and causing the chain 122 to move, the trigger 136 is actuated and the switch 240 is activated as described above. Even while the trigger 136 actuation is maintained, the power unit may be secured and the chain 122 movement stopped in response to tripping the hand guard 134. While the power unit is running, the first biasing element is under compression against the slide 210 and held in such position by a hand guard link 266 that operably couples the hand guard 134 to the slide 210. The hand guard link 266 is held in its position overcoming the pressure exerted by the first biasing element while the hand guard 134 is in its normal operating position. However, when the chain brake 134 is activated (either by the operator's hand against the hand guard or by inertia of the chainsaw 100 during a kickback), the hand guard link 266 is rotated. Rotation of the hand guard link 266 enables the pressure or force provided by the first biasing element 216 to push the slide 210 in the first direction 212. Movement of the slide in the first direction 212 tightens the band 230 so that the band 230 collapses or otherwise contacts the pinion with drum 232 to slow or stop the pinion with drum 232 by providing a friction brake. The amount of friction provided is proportional to the tension of the first biasing element.

When the slide 210 moves in the first direction 212 responsive to the hand guard link 266 moving after a hand guard 134 trip, the trigger linkage 250 is also drawn forward (e.g., generally toward the first direction 212). The trigger linkage 250 is configured to accommodate movement without interference with the actuation of the trigger 136. In this regard, for example, the trigger linkage 250 may include a slotted orifice 270 via which the trigger linkage 250 is operably coupled to the trigger 136 via pin 271. The slotted orifice 270 may enable the trigger linkage 250 to move responsive to a trip of the hand guard 134 without impacting the position of the trigger 136. Thus, for example, if the trigger 136 is actuated to cause the detent 252 to contact the switch lever 260 so that the switch 240 is activated initially, then the trigger linkage 250 may slide forward carrying the slotted orifice 270 forward without moving the pin 271 (which slides within the slotted orifice 270) when the trigger linkage 250 moves forward responsive to tripping of the hand guard 134. Corresponding movement of the slide 210 may therefore be provided in the first direction 212 without forcing a position change for the trigger 136. Instead, the movement of the slide 210 can be accommodated by the ability of the pin 271 to move within the slotted orifice 270 without requiring the trigger 136 to move. Meanwhile, the switch lever 260 includes a notch 272 disposed along a portion thereof. The notch 272 is configured such that when the trigger linkage 250 moves forward within the slotted orifice 270 responsive to the movement of the slide 210 in the first direction 212, the detent 252 is repositioned into the notch 272 so that the force rotating the switch lever 260 to activate the switch 240 is removed and the switch 240 is deactivated.

FIG. 5A illustrates a side view of components of a brake assembly during normal operation with a trigger actuated according to an example embodiment. As can be seen in FIG. 5A, the trigger 136 is actuated (i.e., rotated in the direction shown by arrow 256) and the hand guard 134 is in a normal operating position so that the hand guard link 266 overcomes the force of the spring 216 so that the slide 210 remains positioned toward the second direction 214. Meanwhile, the trigger linkage 250 is moved forward in direction 300 to cause a force to be exerted on the pivot bracket 220 to rotate the pivot bracket 220 in direction 222 to overcome the force of the second spring 224. The position of the trigger linkage 250 also enables the detent 252 to engage the switch lever 260 to cause it to rotate in the direction shown by arrow 262 to activate the switch 240.

FIG. 5B illustrates a side view of components of the brake assembly during operation of a coast brake function after release of the trigger according to an example embodiment. In this regard, when the trigger 136 is no longer actuated, the trigger linkage 250 no longer exerts a force to overcome the second spring 224, and the detent 252 is released from contact with the switch lever 260 so that the switch lever 260 rotates in the direction shown by arrow 264 and the switch 240 is deactivated. When the second spring 224 is allowed to exert a force on the pivot bracket 220 in a direction shown by arrow 223, the pivot bracket 220 pivots about the pivot point mounted on the slide 210 (as shown by arrow 225) to act on the band 230 by pulling on the first end of the band 230 with a force determined by the second spring 224. The band 230 then engages the pinion with drum 232 to apply a coast brake braking function.

FIG. 5C illustrates a side view of components of the brake assembly during operation of a chainbrake function while the trigger remains actuated according to an example embodiment. In the example of FIG. 5C, the trigger 136 remains in the actuated position so that the pivot bracket 220 is positioned to overcome the force of the second spring 224 and prevent application of force on the band 230 by the second spring 224. However, when the hand guard 134 is tripped, the hand guard link 266 is rotated to no longer overcome the force of spring 216. Spring 216 therefore applies a force to move the slide 210 in the first direction 212 and apply a pressure in the first direction 212 to the first end of the band 230. Given that the second end of the band 230 is anchored, the band engages the pinion with drum 232 to apply the chainbrake function thereto. In the meantime, the movement of the slide 210 in the first direction 212 causes the trigger linkage 250 to be drawn forward as well. However, the pin 271 on the trigger 136 that extends into the slotted orifice 270 is allowed to remain stationary within the slotted orifice 270 while the slotted orifice 270 and trigger linkage 250 move to prevent any feedback to the trigger 136. Meanwhile, the detent 252 is moved into the notch 272 so that the switch lever 260 can rotate in the direction shown by arrow 264 to deactivate the switch 240.

In an example embodiment, a chainsaw and/or a brake assembly for a chainsaw is provided. The brake assembly includes a drum (e.g., pinion with drum 232) and a band 230. The chainsaw includes a power unit and a hand guard 314. The power unit is configured to operate at least in part in response to actuation of a trigger 136 to rotate a chain around a bar of the chainsaw. The hand guard 314 is configured to be actuated responsive to contact with a hand of an operator of the chainsaw or inertia to activate the brake assembly to stop rotation of the chain. The drum is coupled to the power unit any includes a friction surface. The band is arranged to receive, at a first end of the band, at least two different forces to be applied to the friction surface of the drum. The at least two different pressures include a first pressure applied responsive to actuation of the hand guard, and a second pressure applied responsive to release of the trigger 136. It is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims.

## Claims

1. A chainsaw (100) comprising:
a power unit configured to operate at least in part in response to actuation of a trigger (136);
a bar (120);
a chain (122) operably coupled to the bar (120) to rotate around the bar (120) responsive to drive power from the power unit when the trigger (136) is actuated; and
a hand guard (134) configured to be actuated responsive to contact with a hand of an operator of the chainsaw (100) or inertia to activate a brake assembly (200) of the chainsaw (100) to stop rotation of the chain (122),
wherein the brake assembly (200) includes a drum (232) and a band (230), wherein the band (230) is arranged to receive at a first end at least two different forces to be applied to a friction surface (234) of the drum (232) coupled to the power unit, a first force applied responsive to actuation of the hand guard (134) and a second force applied responsive to release of the trigger (136), and wherein the brake assembly (200) further includes a slide (210) and a pivot bracket (220), the slide (210) being configured to move in a first direction to apply the first force to the band (230) and in a second direction that is opposite the first direction to relieve or release force on the band (230),
**characterized in that**
the pivot bracket (220) is mounted to the slide (210) to apply the second force to the band (230) and the trigger (136) is operably coupled to the slide (210) via a trigger linkage (250) that contacts a switch lever (260) responsive to actuation of the trigger (136) to activate a switch to apply power to the power unit, wherein the switch lever (260) includes a notch (272), the trigger linkage (250) being configured to move relative to the trigger (136) responsive to activation of the hand guard (134) to position a detent on the trigger linkage (250) in the notch (272) to enable the switch lever (260) to rotate and deactivate the switch while the trigger (136) remains actuated.

2. The chainsaw (100) of claim 1 , wherein a second end of the band (230) is anchored, and wherein a first biasing force is applied to the slide (210) to bias the slide to move linearly the first direction to apply to the first force to the first end of the band (230) in response to the hand guard (134) being actuated.

3. The chainsaw (100) of claim 2, wherein the brake assembly (200) includes a first biasing element (216) provided in line with the slide (210) to apply the first biasing force to the slide (210) when the hand guard (134) link is rotated away from a restraining position responsive to actuation of the hand guard.

4. The chainsaw (100) of claim 1 , wherein the brake assembly (200) is configured such that a second biasing force is applied to the pivot bracket (220) to apply a second force to the first end of the band (230), and wherein actuation of the trigger overcomes the second biasing force.

5. The chainsaw (100) of claim 4, wherein the second biasing force is applied via a second biasing element (224) configured to rotate the pivot bracket (220) relative to the slide (210) to apply the second force to the first end of the band (230).

6. The chainsaw (100) of any of claims 1 to 5, wherein the at least two different forces to be applied to the friction surface of the drum (232) include a first pressure applied responsive to actuation of the hand guard (134) and a second pressure applied responsive to release of the trigger (136) and the first pressure is higher than the second pressure.

7. The chainsaw (100) of any of claims 1 to 5, further comprising a single switch configured to interrupt operation of the power unit responsive to either or both of release of the trigger (136) and actuation of the hand guard (134).

8. The chainsaw (100) of any of claims 1 to 5, wherein the friction surface (234) of the drum (232) is discontinuous.

## Patentansprüche

1. Kettensäge (100), die Folgendes umfasst:
eine Antriebseinheit, die konfiguriert ist, wenigstens teilweise in Reaktion auf die Betätigung eines Auslösers (136) zu arbeiten;
eine Stange (120);
eine Kette (122), die mit der Stange (120) betriebstechnisch gekoppelt ist, um sich in Reaktion auf Antriebsleistung von der Antriebseinheit um die Stange (120) zu drehen, wenn der Auslöser (136) betätigt wird; und
eine Handführung (134), die konfiguriert ist, in Reaktion auf einen Kontakt mit einer Hand eines Bedieners der Kettensäge (100) oder auf die Trägheit betätigt zu werden, um eine Bremsanordnung (200) der Kettensäge (100) zu aktivieren, um die Drehung der Kette (122) anzuhalten,
wobei die Bremsanordnung (200) eine Trommel (232) und ein Band (230) enthält, wobei das Band (230) dafür ausgelegt ist, an einem ersten Ende wenigstens zwei unterschiedliche Kräfte aufzunehmen, die auf eine Reiboberfläche (234) der mit der Antriebseinheit gekoppelten Trommel (232) ausgeübt werden, wobei eine erste Kraft in Reaktion auf eine Betätigung der Handführung (134) ausgeübt wird und eine zweite Kraft in Reaktion auf die Freigabe des Auslösers (136) ausgeübt wird, und wobei
die Bremsanordnung (200) ferner einen Gleiter (210) und einen Schwenkarm (220) enthält, wobei der Gleiter (210) konfiguriert ist, sich in einer ersten Richtung zu bewegen, um die erste Kraft auf das Band (230) auszuüben, und sich in einer zu der ersten Richtung entgegengesetzten zweiten Richtung zu bewegen, um die Kraft auf das Band (230) zu lösen oder zu entlasten,
**dadurch gekennzeichnet, dass**
der Dreharm (220) an dem Gleiter (210) montiert ist, um die zweite Kraft auf das Band (230) auszuüben, und der Auslöser (136) mit dem Gleiter (210) über ein Auslösergestänge (250), das in Reaktion auf eine Betätigung des Auslösers (136) mit einem Schalterhebel (260) in Kontakt gelangt, um einen Schalter zu aktivieren, um in die Antriebseinheit Leistung einzugeben, betriebstechnisch gekoppelt ist, wobei der Schalterhebel (260) eine Nut (272) aufweist, wobei das Auslösegestänge (250) konfiguriert ist, sich in Reaktion auf eine Aktivierung der Handführung (134) relativ zu dem Auslöser (136) zu bewegen, um eine Raste an dem Auslösergestänge (250) in der Nut (272) zu positionieren, um dem Schalterhebel (260) zu ermöglichen, sich zu drehen und den Schalter zu deaktivieren, während der Auslöser (136) betätigt bleibt.

2. Kettensäge (100) nach Anspruch 1, wobei ein zweites Ende des Bandes (230) verankert ist und wobei eine erste Gegenkraft auf den Gleiter (210) ausgeübt wird, um den Gleiter vorzubelasten, damit er sich geradlinig in der ersten Richtung bewegt, um die erste Kraft auf das erste Ende des Bandes (230) in Reaktion darauf, dass die Handführung (134) betätigt wird, auszuüben.

3. Kettensäge (100) nach Anspruch 2, wobei die Bremsanordnung (200) ein erstes Vorbelastungselement (216) enthält, das in einer Linie mit dem Gleiter (210) vorgesehen ist, um die erste Vorbelastungskraft auf den Gleiter (210) auszuüben, wenn die Handführungsverbindung (134) in Reaktion auf eine Betätigung der Handführung aus der Rückhalteposition gedreht wird.

4. Kettensäge (100) nach Anspruch 1, wobei die Bremsanordnung (200) in der Weise konfiguriert ist, dass eine zweite Vorbelastungskraft auf den Dreharm (220) ausgeübt wird, um eine zweite Kraft auf das erste Ende des Bandes (230) auszuüben, und wobei eine Betätigung des Auslösers die zweite Vorbelastungskraft überwindet.

5. Kettensäge (100) nach Anspruch 4, wobei die zweite Vorbelastungskraft über ein zweites Vorbelastungselement (224), das konfiguriert ist, den Dreharm (220) relativ zu dem Gleiter (210) zu drehen, ausgeübt wird, um die zweite Kraft auf das erste Ende des Bandes (230) auszuüben.

6. Kettensäge (100) nach einem der Ansprüche 1 bis 5, wobei die wenigstens zwei unterschiedlichen Kräfte, die auf die Reiboberfläche der Trommel (232) ausgeübt werden sollen, einen ersten Druck, der in Reaktion auf eine Betätigung der Handführung (134) ausgeübt wird, und einen zweiten Druck, der in Reaktion auf eine Freigabe des Auslösers (136) ausgeübt wird, umfassen, wobei der erste Druck höher als der zweite Druck ist.

7. Kettensäge (100) nach einem der Ansprüche 1 bis 5, die ferner einen einzigen Schalter umfasst, der konfiguriert ist, den Betrieb der Antriebseinheit in Reaktion auf die Freigabe des Auslösers (136) und/oder die Betätigung der Handführung (134) zu unterbrechen.

8. Kettensäge (100) nach einem der Ansprüche 1 bis 5, wobei die Reiboberfläche (234) der Trommel (232) diskontinuierlich ist.

## Revendications

1. Tronçonneuse (100), comprenant:
une unité à énergie configurée pour fonctionner au moins en partie en réponse à l'actionnement d'une gâchette de déclenchement (136);
une barre (120) ;
une chaîne (122) fonctionnellement accouplée à la barre (120) pour entrer en rotation autour de la barre (120) en réponse à de l'énergie d'entraînement à partir de l'unité à énergie lorsque la gâchette de déclenchement (136) est actionnée; et
un protège-main (134) configuré pour être actionné en réponse au contact avec une main d'un opérateur de la tronçonneuse (100) ou à l'inertie pour activer un ensemble à frein (200) de la tronçonneuse (100) pour arrêter la rotation de la chaîne (122),
dans laquelle l'ensemble à frein (200) inclut un tambour (232) et une bande (230), dans laquelle la bande (230) est agencée pour recevoir, à une première extrémité, au moins deux forces différentes destinées à être appliquées sur une surface de frottement (234) du tambour (232) accouplé à l'unité à énergie, une première force étant appliquée en réponse à l'actionnement du protège-main (134) et une seconde force étant appliquée en réponse à la libération de la gâchette de déclenchement (136),
et dans laquelle l'ensemble à frein (200) inclut en outre un coulisseau (210) et un support de pivotement (220), le coulisseau (210) étant configuré pour se déplacer dans une première direction pour appliquer la première force sur la bande (230) et dans une seconde direction qui est oppose à la première direction pour relâcher ou libérer la force sur la bande (230),
**caractérisée en ce que**
le support de pivotement (220) monté sur le coulisseau (210) pour appliquer la seconde force sur la bande (230) et la gâchette de déclenchement (136) est fonctionnellement accouplé au coulisseau (210) par l'intermédiaire d'une tringlerie de gâchette de déclenchement (250) qui entre en contact avec un levier d'interrupteur (260) en réponse à l'actionnement de la gâchette de déclenchement (136) pour activer un interrupteur pour appliquer de l'énergie sur l'unité à énergie,
dans laquelle le levier d'interrupteur (260) inclut une encoche (272), la tringlerie de gâchette de déclenchement (250) étant configurée pour se déplacer par rapport à la gâchette de déclenchement (136) en réponse à l'activation du protège-main (134) pour positionner un cliquet sur la tringlerie de gâchette de déclenchement (250) dans l'encoche (272) pour permettre au levier d'interrupteur (260) d'entrer en rotation et de désactiver l'interrupteur alors que la gâchette de déclenchement (136) reste actionnée.

2. Tronçonneuse (100) selon la revendication 1, dans laquelle une seconde extrémité de la bande (230) est ancrée, et dans laquelle une première force de sollicitation est appliquée sur le coulisseau (210) pour solliciter le coulisseau pour le déplacer linéairement dans la première direction pour appliquer la première force sur la première extrémité de la bande (230) en réponse au protège-main (134) étant actionné.

3. Tronçonneuse (100) selon la revendication 2, dans laquelle l'ensemble à frein (200) inclut un premier élément de sollicitation (216) prévu en alignement avec le coulisseau (210) pour appliquer la première force de sollicitation sur le coulisseau (210) lorsqu'une liaison du protège-main (134) est mise en rotation à l'opposée d'une position de retenue en réponse à l'actionnement du protège-main.

4. Tronçonneuse (100) selon la revendication 1, dans laquelle l'ensemble à frein (200) est configuré de telle sorte qu'une seconde force de sollicitation soit appliquée sur le support de pivotement (220) pour appliquer une seconde force sur la première extrémité de la bande (230), et dans laquelle l'actionnement de la gâchette de déclenchement surpasse la seconde force de sollicitation.

5. Tronçonneuse (100) selon la revendication 4, dans laquelle la seconde force de sollicitation est appliquée par l'intermédiaire d'un second élément de sollicitation (224) configuré pour mettre en rotation le support de pivotement (220) par rapport au coulisseau (210) pour appliquer la seconde force sur la première extrémité de la bande (230).

6. Tronçonneuse (100) selon l'une quelconque des revendications 1 à 5, dans laquelle les au moins deux forces différentes destinées à être appliquées sur la surface de frottement du tambour (232) incluent une première pression appliquée en réponse à l'actionnement du protège-main (134) et une seconde pression appliquée en réponse à la libération de la gâchette de déclenchement (136) et la première pression est supérieure à la seconde pression.

7. Tronçonneuse (100) selon l'une quelconque des revendications 1 à 5, comprenant en outre un seul interrupteur configuré pour interrompre le fonctionnement de l'unité à énergie en réponse à l'un ou l'autre, ou les deux, de la libération de la gâchette de déclenchement (136) et de l'actionnement du protège-main (134).

8. Tronçonneuse (100) selon l'une quelconque des revendications 1 à 5, dans laquelle la surface de frottement (234) du tambour (232) est discontinue.
